# EUROPEAN PATENT SPECIFICATION

(11) **EP 2 657 792 B1**
(45) Date of publication and mention of the grant of the patent: **15.11.2017**
(21) Application number: 12165341.4
(22) Date of filing: 24.04.2012
(51) Int. Cl.: G03H 1/04, G03H 1/02, G03H 1/00

(54) **Device and method for holographic reflection imaging**
Vorrichtung und Verfahren für die holografische Reflektionsabbildung
Dispositif et procédé d'imagerie par réflexion holographique

(43) Date of publication of application: 30.10.2013
(73) Proprietor: IMEC, 3001 Leuven (BE)
(72) Inventor: Huys, Roeland, 3001 Leuven (BE); Stahl, Richard, 3001 Leuven (BE); VanMeerbeeck, Geert, 3001 Leuven (BE); Peumans, Peter, 3001 Leuven (BE)
(74) Representative: Hertoghe, Kris Angèle Louisa

(56) References cited:
- WO-A1-2011/049965
- MYUNGJUN LEE ET AL: "Field-portable reflection and transmission microscopy based on lensless holography", BIOMEDICAL OPTICS EXPRESS, vol. 2, no. 9, 1 September 2011 (2011-09-01), page 2721, XP55032172, ISSN: 2156-7085, DOI: 10.1364/BOE.2.002721

## Description

### Field of the invention

The present invention relates to the field of holographic imaging. More specifically it relates to the field of digital holographic microscopy, e.g. for observation and analysis of biological cells.

### Background of the invention

Holography was invented over 60 years ago by the physicist Dennis Gabor and is a technique that allows the light scattered from an object to be recorded and later reconstructed. Digital holography uses digital reconstruction of the diffraction patterns.

In digital holographic microscopy, a diffraction pattern, obtained by interference between a reference wave and an object wave which has interacted with an object of interest, may be detected and stored in a digital recording. By applying a reconstruction algorithm to such a recorded diffraction pattern, an image or image signature of the object of interest may be obtained. Coherent or partially coherent light, collimated by a small aperture, may be used to illuminate an object in order to produce a diffraction pattern. This diffraction pattern may then be acquired by a high resolution optoelectronic sensor array. Such a lens-free holographic microscopy setup may produce a hologram of the object with phase information encoded in the diffraction images. Lens-free holographic imaging can provide an attractive low-cost solution for imaging small objects, e.g. microscopic objects such as biological cells, because no expensive or complex optical components, such as high-quality optical lenses, are required.

Methods for holographic imaging in biological applications known in the art may be primarily based on in-line transmission geometry, in which coherent light from a light source illuminates a sample, which may be positioned on a glass substrate, and the diffraction or fringe pattern is recorded on an imager which is positioned on the opposite side of the sample with respect to the light source.

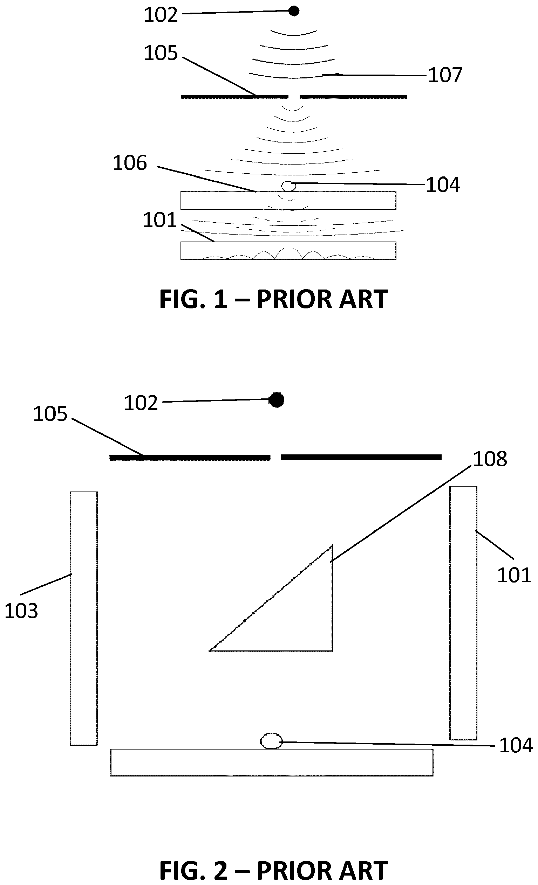

FIG. 1 illustrates an exemplary holography setup, which may be known in the art, for creating a holographic image of a transparent object. This setup comprises a light source 102, a aperture 105, e.g. a pin-hole, a transparent surface 106, e.g. a glass substrate, for supporting an object 104, and an image sensor 101. The aperture 105 may collimate a light wave 107 emanating from the light source 102 to produce a substantially planar parallel coherent or partially coherent light wave near the object 104 after propagating unimpeded over a suitable distance between the aperture 105 and the object 104. The light wave may then interact with the object 104, e.g. may undergo a phase shift due to changes in refractive index while passing through the object 104. The diffraction pattern formed by interference of an object wave component, which has interacted with the object 104, and a reference wave component, which has passed through the transparent surface 106 without interacting with the object 104, may then be recorded by the image sensor 101.

In a paper by Su et al., published in Lab Chip, 2009, 9, 777-787, a lens-free holographic cytometer is disclosed. This paper describes an imaging and reconstruction method that may result in an improvement of the reconstructed images, by providing rich texture information. This system is furthermore used for characterization and counting of cells which are positioned on a CMOS imaging chip. The paper therefore demonstrates that identification and/or characterization of a heterogeneous cell solution on a chip is feasible based on pattern recognition of the holographic diffraction pattern of each cell type.

However, holographic imaging using an in-line transmission geometry may not be suitable for imaging non-transparent samples. Furthermore, dense or connected objects, such as biological tissue samples, may prevent the undistorted transmission of a suitable fraction of the wave through the sample in order to form a reference wave component. Therefore, when imaging such a non-transparent or dense sample, a suitable object wave component may preferentially be obtained by reflection on the surface of the sample, instead of transmission through the sample.

When a high resolution for small objects needs to be achieved, the reflective-mode setup may involve a complicated set-up. FIG. 2 illustrates the working principles of a field portable reflection/transmission microscope based on lens-less holography, which was disclosed in a paper by Lee et al., published in Biomedical Optics Express, 2011, 2(9), 2721-2730. The configuration of this setup is similar to that of a Michelson interferometer, and comprises a light source 102, an image sensor 101, e.g. a CMOS sensor-chip, a reflective surface 103 and a beam splitting device 108. It demonstrates a lens-less reflection-mode microscope based on digital off-axis holography in which a beam-splitter 108 and a reflective surface 103 are used to produce a tilted reference wave for producing an interference pattern by superposition on the reflected light from the object 104. Therefore, an off-axis hologram of the object 104 is created on the image sensor 101. The beam-splitter 108 is an essential feature of the device for the interference of the reflected beam with the reflected light from an object to create the hologram.

### Summary of the invention

It is an object of embodiments of the present invention to provide good means and methods for creating holographic images.

The above objective is accomplished by a method and device according to the present invention.

In a first aspect, the present invention provides a holographic imaging device as recited in appended independent claim 1. It is an advantage of embodiments of the present invention that a simple and compact optical setup is provided for holographic imaging of non-transparent, e.g. reflective objects.

It is an advantage of embodiments of the present invention that an imaging device is provided that may be placed close to the observed object, while capturing a large portion of the light diffracted by the object.

In embodiments of the present invention, the at least one radiation source may be located between the image sensor and the reflective surface, such that the radiation source is capable of emitting a radiation wave towards the reflective surface and the object under study from a point or volume which is contained in the space between the plane in which the image sensor lies and the plane in which the reflective surface lies. In particular embodiments, the at least one radiation source may be located on the image sensor.
A device according to embodiments of the present invention may furthermore comprise at least one aperture optically coupled to the at least one radiation source for imparting a spatial coherence to said radiation wave. The aperture may be formed in the image sensor. In particular embodiments, the at least one radiation source may be located inside said at least one aperture.

A device according to embodiments of the present invention may further comprise a MEMS-based optical valve arranged on said image sensor for shutting said aperture.

In a device according to embodiments of the present invention, the at least one radiation source may comprise a MEMS device for directing said radiation wave towards said reflective surface.

In a device according to embodiments of the present invention, the at least one radiation source may comprise an optical waveguide, light emitting diode and/or laser.

A device according to embodiments of the present invention may furthermore comprise an actuating means for moving the image sensor in relation to said object under study and/or said at least one radiation source for recording multiple images from the object.

In a device according to embodiments of the present invention, the image sensor may comprise a multispectral or hyperspectral image sensor.

In a device according to embodiments of the present invention, the at least one radiation source may comprise a plurality of light sources for emitting light of different wavelengths.

A device according to embodiments of the present invention may furthermore comprise at least one microfluidic channel for transporting the object under study in a fluid stream. The reflective surface may form a wall of said at least one microfluidic channel.

In a second aspect, the present invention provides a method for imaging an object under study as recited in appended independent claim 13. Other aspects of the invention are set out in the accompanying dependent claims. These and other aspects of the invention will be apparent from and elucidated with reference to the embodiment(s) described hereinafter.

### Brief description of the drawings

FIG. 1 illustrates a prior art device for creating holographic images of a transparent object.
FIG. 2 illustrates a prior art device for creating holographic images of a non-transparent object.
FIG. 3 shows a holographic imaging device according to a first embodiment of a first aspect of the present invention.
FIG. 4 shows a holographic imaging device according to a second embodiment of the first aspect of the present invention.
FIG. 5 shows a holographic imaging device according to a third embodiment of the first aspect of the present invention.
FIG. 6 shows a holographic imaging device according to a fourth embodiment of the first aspect of the present invention.
FIG. 7 shows a holographic imaging device according to a fifth embodiment of the first aspect of the present invention.
FIG. 8 shows an exemplary method according to embodiments of a second aspect of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a holographic imaging device for imaging an object under study. This holographic imaging device comprises a reflective surface and a radiation source for directing a radiation wave towards the reflective surface and the object under study. The holographic imaging device furthermore comprises an image sensor arranged so as to receive the radiation wave when reflected by the reflective surface and by the object under study. The image sensor is adapted for determining an interference pattern between the radiation wave reflected by the reflective surface and the radiation wave reflected by the object under study. The holographic imaging device is adapted for directly directing the by the object under study reflected radiation wave towards the image sensor. With "directly directing" is meant that no supplementary optical elements are provided between the object under study and the image sensor.

It is an advantage of embodiments of the present invention that due to the lack of supplementary optical elements between the object under study and the image sensor, for directing a radiation wave reflected from the object under study towards the image sensor, a more compact set-up may be achieved.

In particular embodiments of the present invention, the reflective surface and the image sensor are arranged substantially parallel to one another. Furthermore, the object under study may be positioned on or in the neighborhood of the reflective surface. This way, imaging may be done from the side of the reflective surface, e.g. the top of the device, while substantially simultaneously or at another moment other functionality can be used which may be present at the other side of the reflective surface, such as for example impedance measurement.

It is an object of embodiments of the present invention that non-transparent objects under study may be imaged. Alternatively, imaging of transparent objects under study may be performed.

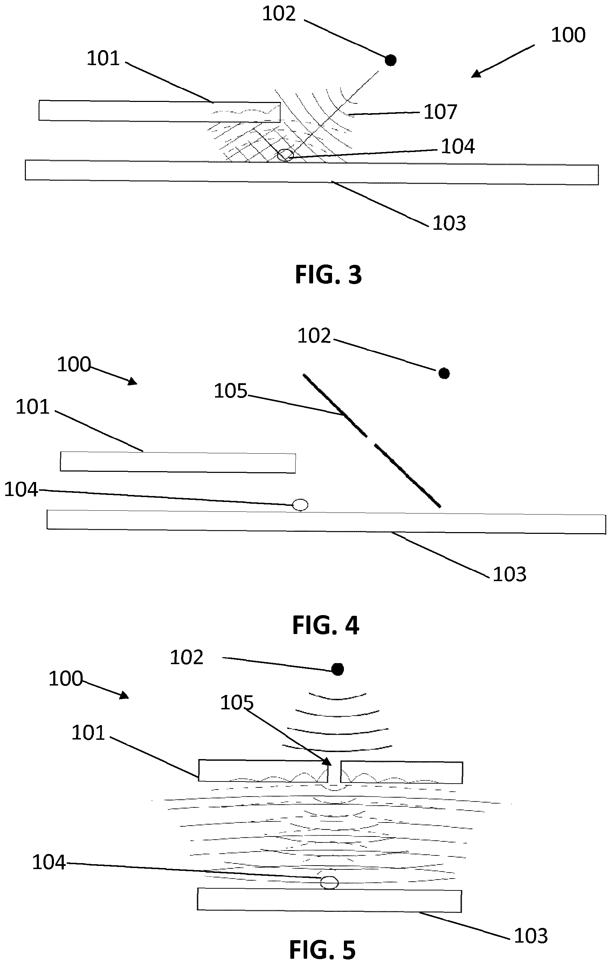

Referring to FIG. 3, a first exemplary embodiment of a holographic imaging device 100 for imaging an object under study 104 according to the first aspect of the present invention is presented.

Depending on the wavelengths emitted by the radiation source, the object under study 104 may be a microscopic or nanometer-scale material entity, e.g. of dimensions less than 500 µm, e.g. 100 µm of less, or less than 50 µm, or less than 5 µm, or less than 500 nm. In particular embodiments, the object has dimensions larger than about half the wavelength emitted by the radiation source. The object under study 104 may comprise multiple connected or disconnected, independent or interrelated material entities, and may be of biological or non-biological nature. This object may be non-transparent, e.g. not suitable for transmission imaging. The object may have different refractive index properties than its surrounding medium, e.g. air or a solvent fluid, e.g. in order to at least partially reflect light incident thereupon. In embodiments of the invention, the object 104 may comprise particles, cells or other samples of a biological nature. Alternatively, the object 104 may not be of a biological nature, for example a structure mounted or processed on a chip, such as a MEMS structure, e.g. MEMS cantilevers or micro-mechanical devices.

The device 100 comprises an image sensor 101. This image sensor 101 may comprise a multispectral or hyperspectral image sensor. The image sensor 101 may typically comprise a plurality of pixel elements, e.g. radiation sensor elements, which may be arranged in an array, e.g. a grid of such pixel elements. For example, the image sensor 101 may comprise a CCD or CMOS image sensor. The image sensor 101 may be adapted for providing a digital representation of the distribution of a radiative quantity received over an imaging plane of the image sensor 101.

The device 100 also comprises at least one radiation source 102, e.g. at least one light source. The at least one radiation source 102 may be a source of at least partially coherent radiation, e.g. a source of coherent or partially coherent radiation, e.g. having a spatial and temporal coherence sufficient for obtaining interference patterns. In particular embodiments, the coherence area of the radiation wave in a plane perpendicular to the direction of wave propagation and intersecting with the object 104 may be at least of similar dimensions as the object 104 to be imaged, and preferentially a multiple thereof, e.g. a factor 10 larger, or even more preferred, a factor 100 larger. Furthermore, the coherence time of the radiation wave propagating from the radiation source 102 may be at least sufficient to allow interference fringes to form over phase differences corresponding to the optical path length differences between waves reflecting off the object 104 and reflecting off the reflective surface 103 near the object 104. The radiation source 102 may therefore comprise a coherent or partially coherent light source, e.g. a coherent or partially coherent source of monochromatic visible light or narrow bandwidth visible light, such as, for example, a light emitting diode (LED) or a light amplification by stimulated emission of radiation device (LASER). While light may relate to visible light, it may also refer to invisible bands of the electromagnetic spectrum, e.g. the radiation source 102 may provide visible light, infrared light, microwaves or ultraviolet light. However, embodiments of the present invention may equally relate to other radiation qualities, such as coherent electron waves, e.g. as used in electron microscopes, or coherent X-ray waves. While the radiation source 102 may comprise means for actively generating a specific radiation quality, such as a LED or LASER, the radiation source 102 may equally well comprise means for passively supplying and directing a radiation quality, such as an optical waveguide. The radiation source 102 may further comprise a plurality of interrelated or independent radiation sources, e.g. a plurality of light sources for emitting light of different wavelengths.

The device 100 further comprises a reflective surface 103. Particularly, this reflective surface 103 may be adapted to reflect the radiative quantity provided by the radiation source 102. For example, for visible light, the reflective surface 103 may comprise a mirror, e.g. a polished front-surface mirror, for example comprising a conductive layer, such as a gold layer, arranged on top of a substrate carrier, e.g. a glass support substrate. For other radiative quantities, the reflective surface 103 may comprise similar means for reflecting that type of radiation. In embodiments of the invention, the reflective surface 103 may be a surface of a non-transparent substrate, such as a semiconductor material, e.g. a silicon-based chip. The reflective surface may also be a surface of a substrate which may scatter incident light if used in transmission mode, such as a wall of a microfluidic channel. The reflective surface may be a surface of a substrate which is not accessible from a side of the substrate opposite the reflective surface due to design considerations, e.g. when a base layer or structure supports the substrate.

The at least one radiation source 102 is adapted for directing a radiation wave, e.g. a light beam, towards the reflective surface 103 and the object under study 104. For example, a light source may illuminate both the reflective surface 103 and the object 104, which may be placed between the reflective surface 103 and the light source, e.g. the object and the reflective surface are illuminated by the light beam, the object being located in the cone of a light beam.

The image sensor 101 is arranged so as to receive the radiation wave when reflected by the reflective surface 103 and the radiation wave when reflected by the object under study 104. The image sensor 101 is furthermore adapted for determining an interference pattern between the radiation wave reflected by the reflective surface 103 and the radiation wave reflected by the object under study 104. In operation, the object under study 104 may be located in between the imaging plane of the image sensor 101 and the plane in which the reflective surface 103 lies. The object under study 104 may be located on the reflective surface 103. The image sensor 101 may be arranged to receive the radiation wave reflected from the object 104 and to receive the radiation wave reflected from the reflective surface 103. The radiation wave reflected from the object 104 may act as an object beam, while the radiation wave reflected from the reflective surface 103 may act as a reference beam, in order to jointly form, by wave interference, a holographic image at the imaging plane of the image sensor 101. The combination of this reference and object beams may therefore be recorded by the image sensor 101, so as to create a holographic image representation, e.g. a digitally stored hologram. The radiation wave reflected by the object under study 104 may be directly directed towards the image sensor 101, i.e. without intermediate optical elements for e.g. changing the direction of the reflected radiation wave. This allows a compact set-up of a holographic imaging device according to embodiments of the present invention.

In particular embodiments of the present invention, the reflective surface 103 may be a concave surface, for coping with the spherical wavefronts received from the radiation source so as to obtain a substantially planar wavefront reflection. In alternative embodiments, non-planar wavefronts can be dealt with in software. Both solutions allow to deal with non-planar wavefronts, hence allow a reduction of the distance between the image sensor 101 and the reflective surface 103.

In embodiments of the invention, the reflective surface 103 may be part of a micro-fluidic channel, in which the object 104 may be contained in the micro-fluidic channel, e.g. transported in an aqueous solution, such that the object 104 may be illuminated and imaged while travelling past the radiation source 102 and image sensor 101.

The image sensor 101 may record an interference pattern from the radiation wave, e.g. optical beam, reflected from the object under study 104 and the radiation wave, e.g. optical beam, reflected from the reflective surface 103. The object 104 may be located near to or in contact with the reflective surface 103. In particular embodiments, the image sensor 101 and the reflective surface 103 may be arranged parallel to one another. The radiation waves are reflected by the reflective surface and the object onto the image sensor 101, such that additional optical components for projecting further optical beams onto the image sensor 101 to create a holographic image may be avoided.

The image sensor 101 and the reflective surface 103 may be separated by a small distance, e.g. less than 1 mm, for example 500 µm, or preferentially less than 100 µm, e.g. 50 µm.

In embodiments of the invention, the radiation source 102 may be located in between the image sensor 101 and the reflective surface 103. Particularly, the radiation source 102 may emit a radiation wave 107 towards the reflective surface 103 and the object under study 104 from a point or volume which is contained in the space between the plane in which the image sensor 101 lies and the plane in which the reflective surface 103 lies.

In a second exemplary embodiment according to the first aspect of the present invention, illustrated in FIG. 4, the radiation source 102 may further comprise an aperture 105, e.g. at least one aperture 105, optically coupled to the radiation source 102, e.g. a pin-hole collimator placed in front of the radiation source 102, e.g. a LED. Such aperture 105 may advantageously produce partially coherent or coherent radiation from the radiation source, e.g. may impart a spatial coherence to the radiation wave when reflecting on the reflective surface 103. Therefore, light may be produced which has a sufficiently large coherence area near the reflective surface 103, e.g. a coherence area as discussed hereinabove in relation to the radiation source 102. Therefore, the aperture 105, e.g. the pin-hole collimator, relaxes the coherence requirements of the radiation source 102 and may therefore reduce the overall cost of the device. In other words, the aperture 105 may improve the spatial coherence of the radiation wave 107 propagating from the radiation source 102, e.g. light emitted by a low-coherence source such as a LED, so as to enable the formation and recording of an interference pattern, e.g. holographic fringes, by the image sensor 101.

Further, referring to FIG. 5, in embodiments of the invention, the image sensor 101 may comprise an aperture 105. The radiation source 102 may be located above the image sensor 101. The aperture 105 may therefore be a through hole perforating the image sensor 101 in order to allow radiation, e.g. light, to pass through the aperture 105. This aperture 105 may function as a pin-hole for illuminating the object 104 with spatially coherent radiation, e.g. when this object is located between the image sensor 101 and the reflective surface 103 or is located on the reflective surface 103. As an advantage, the image sensor 101 can be placed close to the observed object 104 and parallel to the reflective surface 103, while capturing almost all light diffracted by the object.

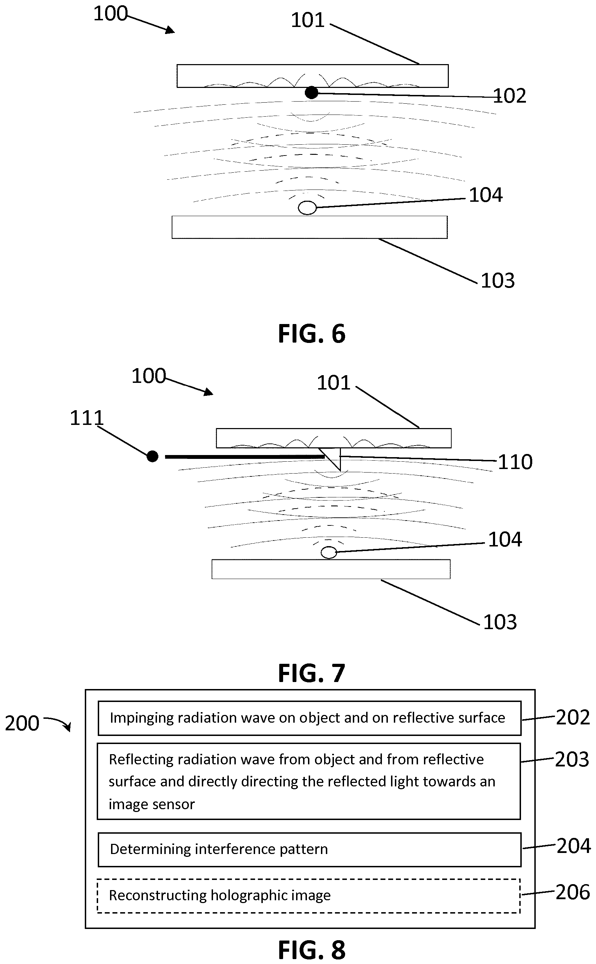

Referring to FIG. 6, the radiation source 102 may be arranged on the image sensor 101. For example, the image sensor 101 may form part of a semiconductor circuit chip on which the radiation source 102, e.g. a LED or VCSEL (Vertical-cavity surface-emitting laser), is also integrated. For example, the radiation source 102 may be a LED, which can be mounted on the imager by MCM (multichip module) integration, or direct process integration, e.g. processing the imager in GaN technology and providing the LED or a plurality of LEDs on a predetermined location or locations. Furthermore, a plurality of radiation sources 102 may be positioned on the image sensor 101, and multiple images of the object 104 may be obtained corresponding to radiation waves produced by this plurality of radiation sources.

In embodiments of the invention, the radiation source 102 may be located inside the aperture 105, e.g. integrated into the wall of the aperture 105. As an advantage thereof, the device 100 may be more compact and easier to handle. As a further advantage, the device 100 may be implemented as a single chip solution, e.g. which requires no further assembly actions. Therefore, this device may be a compact alternative to, for example, a conventional optical microscope.

Embodiments of the first aspect of the invention may further comprise at least one MEMS-based optical valve for shutting said aperture 105 provided in the image sensor 101. Furthermore, a plurality of apertures 105 may dynamically shut out a plurality of radiation sources, e.g. LED's, for example for creating a more detailed holographic image of the object under test. Several images can be recorded for creating a super-resolution and/or multispectral image of the object under investigation.

As an additional advantage, a high-density array of radiation sources may be provided in order to create a programmable wavefront. This may be useful for generating a quasi-planar wavefront near the object 104 and/or near the reflective surface 103, regardless of a very short distance between the image sensor 101 and the reflective surface 103. The waves coming out of all the radiation sources have to be in phase synchronization. This can for example be realized by having a well engineered "path-match" optical waveguide delivery of the light from the single light sources to the plurality of pin-holes.

In an embodiment of the first aspect of the invention, the radiation source 102 may comprise a microelectromechanical systems (MEMS) device 110 for reflecting a radiation wave, e.g. emitted by an at least partially coherent external radiation emitter 111, onto the object under study 104 and the reflective surface 103. The MEMS device 110 for reflecting the radiation wave can be arranged in the region between the reflective surface 103 and the image sensor 101, or the MEMS device 110 can be arranged on the image sensor 101, e.g. on the surface of the image sensor 101 which faces the reflective surface 103. Advantageously, this allows the radiation wave to be generated externally, e.g. by an external light source 111 with high coherency, low speckle, etc., regardless of physical dimensions of the light source. The light of such external light source 111 may thus be delivered onto the object under study 104 by reflecting on the MEMS device 110. In such embodiments, the radiation wave may for example be generated by an external laser device. The external radiation source 111 may be located outside the region between the image sensor and the reflective surface, and may therefore be subject to less tight design constraints.

In embodiments of the first aspect of the invention, the device 100 may further comprise an actuating means, e.g. a sub-pixel moving means, for relative movement of the image sensor 101 with respect to the object under study 104 and/or with respect to the radiation source 102, for recording multiple images from the object 104 from different viewpoints. As an advantage, a higher resolution holographic image of the object can be obtained resulting in a more detailed analysis of the object under investigation. The higher resolution holographic image may be obtained by recording a plurality of images resulting in a super-resolution holographic image. As an advantage, a single light source may suffice to achieve super-resolution imaging. The relative position of the light source with respect to the imager may change at a sub-pixel level. For example, nine images may be acquired with sub-pixel shifts, e.g. forming a grid of three columns in a first direction and three rows in an orthogonal direction, which may result in a threefold increase in resolution of the final reconstructed image compared to a single image acquisition.

In embodiments of the first aspect of the device, the at least one radiation source 102 may comprise an optical waveguide to provide a localized light emission point. The optical waveguide may be an optical fiber which is positioned on top of the image sensor 101, and may end in between the image sensor 101 and the reflective surface 103, e.g. to direct light towards the reflective surface 103. Furthermore, a plurality of optical waveguides may be positioned on the image sensor 101. The plurality of optical waveguides may be controlled individually so as to illuminate the object under study 104 under investigation from different perspectives in order to create a higher resolution holographic image from a plurality of recorded images. As an advantage, the higher resolution image or super-resolution image provides a more detailed image of the object under investigation 104. Furthermore, light may be supplied to the optical waveguide or optical waveguides by an external light source 111. As an advantage, the light is fully contained within the waveguide, without any scattering of light of objects in its path. In embodiments of the first aspect of the invention, a single external light source 111 may used, e.g. emitting light which is split into multiple optical waveguides. The external light source 111 may furthermore be tunable for different wavelengths, e.g. comprise a tunable laser.

In embodiments of the invention, a filter may be used to tune the wavelength of the radiation source 102 to a specific wavelength, e.g. to improve the spectral coherence of the emitted radiation.

In embodiments of the first aspect of the invention, the radiation source 102 may comprise a plurality of light sources, in which each light source may have a different wavelength. Any one of the plurality of light sources may be a monochromatic light source with a predetermined wavelength. A sequence of images of the object under study may be recorded, in which for each recording a different light source may illuminate the object. For example, when imaging biological samples, light absorption and/or scattering properties may differ in a wavelength dependent manner between cells and/or organelles.

In an embodiment of the first aspect of the invention, a multispectral image sensor may be used in combination with a radiation source 102 for illuminating the object under study 104 with multiple wavelengths, so as to enable multispectral imaging. A holographic image may be captured by multiple sequential captures. As an advantage, this may lead to a better overall reconstructed image quality of the object under study. As an additional advantage, the information comprised in the reconstructed image may e.g. be used to identify differences between dead or living cells, which may for example be of interest for application in the biopharmaceutical industry.

The device 100 may furthermore comprise a processor or processing means for reconstructing an image representation of the object under study 104, e.g. a holographic image, taking into account the determined interference pattern. This reconstruction may be achieved by standard algorithms known in the art, e.g. Fresnel approximation, convolution approximation and/or angular spectrum approximation algorithms. Furthermore, it may be an advantage of embodiments of the invention that the distance and inclination between the image sensor 101 and the object 104 do not need to be controlled or determined. In embodiments of the invention, software algorithms, e.g. implemented on the processor or processing means, may compensate for mechanical inaccuracies or uncertainties, for example the x-y-z alignment coordinates and exact offset and/or distance measurements, and the xy-xz-yz rotational alignments. These may be compensated in software by, for example, sweeping across multiple depths to find the exact reconstruction distance. The nature of the holographic reconstruction algorithm enables this, as the recorded image basically contains information from all the depths, i.e. from the whole imaged volume.

In a second aspect, the invention relates to a method 200 for imaging an object under study 104, e.g. for creating a holographic image of the object 104. Referring to FIG. 8, the method 200 comprises impinging 202 an at least partially coherent radiation wave 107 on the object under study 104 and on a reflective surface 103, e.g. irradiating the object 104 and the reflective surface 103 with at least one radiation source 102, for example illuminating the object 104 and the reflective surface 103 with at least one light source, e.g. a LED or a laser. This impinging 202 may comprise illuminating the object under study 104 with a plurality of distinct light sources. This impinging 202 may comprise providing the object 104 into the radiation wave 107 impinging on the reflective surface 103, e.g. placing the object 104 atop the reflective surface 103. The object 104 may also be provided in flow in a micro-fluidic channel, and transported by this flow through the region illuminated by the radiation wave 107. The impinging 202 may be performed using a coherent light source. If the object is in flow, the impinging may be performed when the object 104 passes an image sensor 101. The coherent light source may comprise a light source in combination with a pin-hole, e.g. a LED and a pinhole, or may comprise a laser. The optical beam of the coherent light source may thus be reflected by the object under investigation 104, e.g. a reflective object. The optical beam may also simultaneously be reflected by the reflective surface 103.

The method 200 also comprises reflecting 203 the impinging radiation wave 107 from the object under study 104 and from the reflective surface 103. This reflecting 203 includes directly directing the reflected light towards an image sensor 101, i.e. without passing the reflected light via an optical element, e.g. for changing its direction.

The method 200 further comprises determining 204 an interference pattern between the radiation wave 107 reflected by the reflective surface 103 and the radiation wave reflected by the object under study 104, e.g. recording the interference pattern of reflected optical beams from the object 104 and from the reflective surface 103, for example recording this interference pattern with an image sensor 101. This determining 204 may comprise determining a plurality of interference patterns corresponding to light originating from a plurality of distinct light sources.

The method 200 may further comprise the step of reconstructing 206 an image representation of the object under study 104, e.g. a holographic image, taking into account the interference pattern.

The method may further comprise the activating or deactivating MEMS-based optical valves, e.g. located inside an aperture on the image sensor 101, for illuminating the object 104 from different perspectives and recording multiple images of the object 104 to create a super-resolution holographic image. The method may further comprise a step of imaging the object 104 multiple times and post-processing data to create a super-resolution image.

The method 200 may further comprise a step of illuminating the object with different wavelengths and capturing multiple images of the object to create a holographic image. The capturing can be performed by a CMOS multi or hyperspectral image sensor.

The method 200 may be used in combination with a device 100 as described in relation to the first aspect of the present invention.

## Claims

1. A holographic imaging device (100) for imaging an object under study (104), the device comprising:
- a reflective surface (103),
- at least one radiation source (102) for directing a first radiation wave (107) towards said reflective surface (103) and the object under study (104), and
- an image sensor (101) arranged to receive a second radiation wave obtained by reflection of said first radiation wave (107) by said reflective surface (103) and to receive a third radiation wave obtained by reflection of said first radiation wave (107) by said object under study (104), when said object under study is positioned on or in a neighborhood of said reflective surface and between said reflective surface and said at least one radiation source, said image sensor (101) being adapted for recording an interference pattern between said second radiation wave and said third radiation wave,
wherein
the holographic imaging device is adapted for directly directing the third radiation wave reflected by the object under study (104) towards the image sensor (101),
wherein said image sensor and said reflective surface are parallel to one another.

2. The device according to claim 1, wherein said at least one radiation source (102) is located between the image sensor (101) and the reflective surface (103) such that the radiation source is capable of emitting said first radiation wave toward the reflective surface and the object under study from a point or volume which is contained in the space between the plane in which the image sensor lies and the plane in which the reflective surface lies.

3. The device according to any of claim 1 or claim 2, wherein said at least one radiation source (102) is located on the image sensor (101).

4. The device according to any of the previous claims, wherein the image sensor comprises at least one aperture (105) optically coupled to the at least one radiation source (102) for imparting a spatial coherence to said radiation wave.

5. The device according to claim 4, further comprising a MEMS-based optical valve arranged on said image sensor (101) for shutting said aperture (105).

6. The device according to any of the previous claims, wherein the at least one radiation source (102) comprises a MEMS device (110) for directing said first radiation wave towards said reflective surface (103).

7. The device according to any of the previous claims, wherein said at least one radiation source (102) comprises an optical waveguide, light emitting diode and/or laser.

8. The device according to any of the previous claims, furthermore comprising an actuating means for moving the image sensor (101) in relation to said object under study (104) and/or said at least one radiation source (102) for recording multiple images from the object (104).

9. The device according to any of the previous claims, wherein the image sensor (101) comprises a multispectral or hyperspectral image sensor.

10. The device according to any of the previous claims, wherein said at least one radiation source (102) comprises a plurality of light sources for emitting light of different wavelengths.

11. The device according to any of the previous claims, furthermore comprising at least one microfluidic channel for transporting the object under study in a fluid stream.

12. The device according to claim 11, wherein said reflective surface (103) forms a wall of said at least one microfluidic channel.

13. A method (200) for imaging an object under study (104), the method comprising:
- impinging (202) an at least partially coherent radiation wave (107) from at least one radiation source (102) on an object under study (104) and on a reflective surface (103), the object under study being positioned on or in a neighborhood of said reflective surface and between said reflective surface and said at least one radiation source,
- reflecting (203) the radiation wave (104) from the object under study (104) and from the reflective surface (103), and
- recording (204) an interference pattern between a radiation wave reflected by the reflective surface (103) and a radiation wave reflected by the object under study (104) using an image sensor (101),
wherein reflecting (203) the radiation wave from the object under study (104) includes directly directing the reflected light towards an image sensor (101) being parallel to the reflective surface (103).

14. The method (200) according to claim 13, furthermore comprising reconstructing (206) an image representation of said object under study (104) taking into account said interference pattern.

## Patentansprüche

1. Holographische Abbildungsvorrichtung (100) zum Abbilden eines in Untersuchung befindlichen Objekts (104), wobei die Vorrichtung umfasst:
- eine reflektierende Oberfläche (103),
- wenigstens eine Strahlungsquelle (102) zum Lenken einer ersten Strahlungswelle (107) in Richtung der reflektierenden Oberfläche (103) und des in Untersuchung befindlichen Objekts (104), und
- einen Bildsensor (101), der dazu eingerichtet ist, eine zweite Strahlungswelle zu empfangen, die durch Reflektion der ersten Strahlungswelle (107) durch die reflektierende Oberfläche (103) erhalten wird, und eine dritte Strahlungswelle zu empfangen, die durch Reflektion der ersten Strahlungswelle (107) durch das in Untersuchung befindliche Objekt (104) erhalten wird, wenn das in Untersuchung befindliche Objekt auf oder in Nachbarschaft zu der reflektierenden Oberfläche und zwischen der reflektierenden Oberfläche und der wenigstens einen Strahlungsquelle positioniert ist, wobei der Bildsensor (101) zum Aufzeichnen eines Interferenzmusters zwischen der zweiten Strahlungswelle und der dritten Strahlungswelle ausgebildet ist,
wobei die holographische Abbildungsvorrichtung zum direkten Lenken der durch das in Untersuchung befindliche Objekt (104) reflektierten dritten Strahlungswelle in Richtung des Bildsensors (101) ausgebildet ist,
wobei der Bildsensor und die reflektierende Oberfläche parallel zueinander sind.

2. Vorrichtung nach Anspruch 1, wobei sich die wenigstens eine Strahlungsquelle (102) derart zwischen dem Bildsensor (101) und der reflektierenden Oberfläche (103) befindet, dass die Strahlungsquelle in der Lage ist, die erste Strahlungswelle in Richtung der reflektierenden Oberfläche und des in Untersuchung befindlichen Objekts von einem Punkt oder Volumen zu emittieren, das in dem Raum zwischen der Ebene, in der der Bildsensor liegt, und der Ebene, in der die reflektierende Oberfläche liegt, enthalten ist.

3. Vorrichtung nach einem aus Anspruch 1 oder Anspruch 2, wobei sich die wenigstens eine Strahlungsquelle (102) auf dem Bildsensor (101) befindet.

4. Vorrichtung nach einem der vorhergehenden Ansprüche, wobei der Bildsensor zum Verleihen einer räumlichen Kohärenz an die Strahlungswelle wenigstens eine Blende (105) umfasst, die optisch mit der wenigstens einen Strahlungsquelle (102) gekoppelt ist.

5. Vorrichtung nach Anspruch 4, weiter ein MEMS-basiertes optisches Ventil zum Schließen der Blende (105) umfassend, das auf dem Bildsensor (101) eingerichtet ist.

6. Vorrichtung nach einem der vorhergehenden Ansprüche, wobei die wenigstens eine Strahlungsquelle (102) eine MEMS-Vorrichtung (110) zum Lenken der ersten Strahlungswelle in Richtung der reflektierenden Oberfläche (103) umfasst.

7. Vorrichtung nach einem der vorhergehenden Ansprüche, wobei die wenigstens eine Strahlungsquelle (102) einen optischen Wellenleiter, eine lichtemittierende Diode und/oder einen Laser umfasst.

8. Vorrichtung nach einem der vorhergehenden Ansprüche, weiterhin ein Betätigungsmittel zum Bewegen des Bildsensors (101) in Verhältnis zu dem in Untersuchung befindlichen Objekt (104) und/oder wenigstens eine Strahlungsquelle (102) zum Aufzeichnen mehrerer Bilder von dem Objekt (104) umfassend.

9. Vorrichtung nach einem der vorhergehenden Ansprüche, wobei der Bildsensor (101) einen multispektralen oder hyperspektralen Bildsensor umfasst.

10. Vorrichtung nach einem der vorhergehenden Ansprüche, wobei die wenigstens eine Strahlungsquelle (102) eine Vielzahl von Lichtquellen zum Emittieren von Licht verschiedener Wellenlängen umfasst.

11. Vorrichtung nach einem der vorhergehenden Ansprüche, weiterhin wenigstens einen mikrofluidischen Kanal zum Transportieren des in Untersuchung befindlichen Objekts in einem Fluidstrom umfassend.

12. Vorrichtung nach Anspruch 11, wobei die reflektierende Oberfläche (103) eine Wand des wenigstens einen mikrofluidischen Kanals bildet.

13. Verfahren (200) zum Abbilden eines in Untersuchung befindlichen Objekts (104), wobei das Verfahren umfasst:
- Auftreffenlassen (202) einer wenigstens teilweise kohärenten Strahlungswelle (107) von wenigstens einer Strahlungsquelle (102) auf ein in Untersuchung befindliches Objekt (104) und auf eine reflektierende Oberfläche (103), wobei das in Untersuchung befindliche Objekt auf oder in Nachbarschaft zu der reflektierenden Oberfläche und zwischen der reflektierenden Oberfläche und der wenigstens einen Strahlungsquelle positioniert ist,
- Reflektieren (203) der Strahlungswelle (104) von dem in Untersuchung befindlichen Objekt (104) und von der reflektierenden Oberfläche (103), und
- Aufzeichnen (204) eines Interferenzmusters zwischen einer durch die reflektierende Oberfläche (103) reflektierten Strahlungswelle und einer durch das in Untersuchung befindliche Objekt (104) reflektierten Strahlungswelle unter Verwendung eines Bildsensors (101),
wobei das Reflektieren (203) der Strahlungswelle von dem in Untersuchung befindlichen Objekt (104) das direkte Lenken des reflektierten Lichtes in Richtung eines Bildsensors (101) einschließt, der zu der reflektierenden Oberfläche (103) parallel ist.

14. Verfahren (200) nach Anspruch 13, weiterhin das Rekonstruieren (206) einer Bilddarstellung des in Untersuchung befindlichen Objekts (104) unter Berücksichtigung des Interferenzmusters umfassend.

## Revendications

1. Dispositif d'imagerie holographique (100) destiné à imager un objet à l'étude (104), le dispositif comprenant :
- une surface réflectrice (103),
- au moins une source de rayonnement (102) destinée à diriger une première onde de rayonnement (107) vers ladite surface réflectrice (103) et l'objet à l'étude (104), et
- un capteur d'image (101) agencé pour recevoir une deuxième onde de rayonnement obtenue par réflexion de ladite première onde de rayonnement (107) par ladite surface réflectrice (103) et pour recevoir une troisième onde de rayonnement obtenue par réflexion de ladite première onde de rayonnement (107) par ledit objet à l'étude (104), lorsque ledit objet à l'étude est positionné sur ou au voisinage de ladite surface réflectrice et entre ladite surface réflectrice et ladite au moins une source de rayonnement, ledit capteur d'image (101) étant adapté pour enregistrer une figure d'interférence entre ladite deuxième onde de rayonnement et ladite troisième onde de rayonnement,
dans lequel le dispositif d'imagerie holographique est adapté pour diriger directement la troisième onde de rayonnement réfléchie par l'objet à l'étude (104) vers le capteur d'image (101),
dans lequel ledit capteur d'image et ladite surface réflectrice sont parallèles l'un à l'autre.

2. Dispositif selon la revendication 1, dans lequel ladite au moins une source de rayonnement (102) est située entre le capteur d'image (101) et la surface réflectrice (103) de telle sorte que la source de rayonnement soit capable d'émettre ladite première onde de rayonnement vers la surface réflectrice et l'objet à l'étude depuis un point ou volume qui est contenu dans l'espace entre le plan dans lequel repose le capteur d'image et le plan dans lequel repose la surface réflectrice.

3. Dispositif selon l'une quelconque de la revendication 1 ou de la revendication 2, dans lequel ladite au moins une source de rayonnement (102) est située sur le capteur d'image (101).

4. Dispositif selon l'une quelconque des revendications précédentes, dans lequel le capteur d'image comprend au moins une ouverture (105) couplée optiquement à l'au moins une source de rayonnement (102) pour communiquer une cohérence spatiale à ladite onde de rayonnement.

5. Dispositif selon la revendication 4, comprenant en outre une valve optique basée sur les MEMS agencée sur ledit capteur d'image (101) pour obturer ladite ouverture (105).

6. Dispositif selon l'une quelconque des revendications précédentes, dans lequel la au moins une source de rayonnement (102) comprend un dispositif MEMS (110) destiné à diriger ladite première onde de rayonnement vers ladite surface réflectrice (103).

7. Dispositif selon l'une quelconque des revendications précédentes, dans lequel ladite au moins une source de rayonnement (102) comprend un guide d'onde optique, une diode électroluminescente et/ou un laser.

8. Dispositif selon l'une quelconque des revendications précédentes, comprenant de plus un moyen d'actionnement destiné à déplacer le capteur d'image (101) par rapport audit objet à l'étude (104) et/ou à ladite au moins une source de rayonnement (102) pour enregistrer de multiples images depuis l'objet (104).

9. Dispositif selon l'une quelconque des revendications précédentes, dans lequel le capteur d'image (101) comprend un capteur d'image multispectral ou hyperspectral.

10. Dispositif selon l'une quelconque des revendications précédentes, dans lequel ladite au moins une source de rayonnement (102) comprend une pluralité de sources de lumière destinées à émettre de la lumière de différentes longueurs d'onde.

11. Dispositif selon l'une quelconque des revendications précédentes, comprenant de plus au moins un canal microfluidique destiné à transporter l'objet à l'étude dans un courant de fluide.

12. Dispositif selon la revendication 11, dans lequel ladite surface réflectrice (103) forme une paroi dudit au moins un canal microfluidique.

13. Procédé (200) d'imagerie d'un objet à l'étude (104), le procédé comprenant :
- l'empiétement (202) d'une onde de rayonnement au moins partiellement cohérente (107) provenant d'au moins une source de rayonnement (102) sur un objet à l'étude (104) et sur une surface réflectrice (103), l'objet à l'étude étant positionné dans ou au voisinage de ladite surface réflectrice et entre ladite surface réflectrice et ladite au moins une source de rayonnement,
- la réflexion (203) de l'onde de rayonnement (104) depuis l'objet à l'étude (104) et depuis la surface réflectrice (103), et
- l'enregistrement (204) d'une figure d'interférence entre une onde de rayonnement réfléchie par la surface réflectrice (103) et une onde de rayonnement réfléchie par l'objet à l'étude (104) à l'aide d'un capteur d'image (101),
dans lequel la réflexion (203) de l'onde de rayonnement depuis l'objet à l'étude (104) inclut la direction directe de la lumière réfléchie vers un capteur d'image (101) qui est parallèle à la surface réflectrice (103).

14. Procédé (200) selon la revendication 13, comprenant en outre la reconstruction (206) d'une représentation d'image dudit objet à l'étude (104) en prenant ladite figure d'interférence en compte.
